# EUROPEAN PATENT APPLICATION

(11) **EP 2 945 015 A1**
(43) Date of publication of application: **18.11.2015**
(21) Application number: 14879718.6
(22) Date of filing: 25.12.2014
(51) Int. Cl.: G03B 17/56, F16M 11/12, H04N 5/222

(54) **SUPPORTING APPARATUS**

(30) Priority: 22.01.2014 JP 2014009774
(71) Applicant: Velbon Kabushiki Kaisha, Tokyo 165-0027 (JP)
(72) Inventor: NAKATANI Koichiro, Tokyo 165-0027 (JP)
(74) Representative: Hancox, Jonathan Christopher
(86) International application number: PCT/JP2014/084225
(87) International publication number: WO 2015/111353

(57) **Abstract**

Provided is a support device with which it is possible to use a supported object stably. A support device (1) is provided with a base body (21) mounted to a leg device. An inclination portion (20) of the base body (21) is mounted with a base end portion of a first turning body (23) and a base end portion of a second turning body (24) so as to be turnable. A tip portion of the first turning body (23) and a tip portion of the second turning body (24) are mounted with a support body (25) so as to be turnable. Both the turning bodies (23, 24) turn upward with respect to the base body (21) so that the support body (25) turns 90 degrees to be in a lengthways state. Both the turning bodies (23, 24) turn downward with respect to the base body (21) so that the support body (25) turns 90 degrees to be in a sideways state.

## Description

### TECHNICAL FIELD

The present invention relates to a support device capable of supporting a supported object stably.

### BACKGROUND ART

Conventionally a support device for a camera platform described in Patent Literature 1, for example, and the like is known. This conventional support device is provided with: a base body mounted to a leg device; a pan turning body provided in the base body so as to be turnable right and left; a tilt turning body provided in the pan turning body so as to be turnable vertically; and a support body provided in the tilt turning body so as to be turnable and turned lengthways and sideways.

The support body in a sideways state (when photographing in a sideways position) allows a supported object such as a camera supported by the support body to be used in a horizontal attitude (in a sideways position), while the support body in a lengthways state (when photographing in a lengthways position) allows a supported object such as a camera supported by the support body to be used in a vertical attitude (in a lengthways position).

### CITATION LIST

### Patent Literature

PTL 1: Japanese Laid-Open Patent No. 2010-266612

### SUMMARY OF INVENTION

### Technical Problem

Using a supported object such as, for example, a camera in a vertical attitude in the above-described conventional support device, however, causes the center of gravity of the supported object to be largely displaced from the center of the leg device, possibly resulting in instability of the supported object during use.

In light of the above problem, the present invention is directed towards providing a support device that enables stable use of a supported object.

### Solution to Problem

A support device according to claim 1 is provided with: a base body mounted to a leg device; a first turning body having a base end portion mounted to the base body so as to be turnable; a second turning body having a base end portion mounted to the base body so as to be turnable; and a support body mounted to a tip portion of the first turning body and a tip portion of the second turning body so as to be turnable for supporting a supported object, in which the first turning body and the second turning body turn upward with respect to the base body so that the support body turns 90 degrees to change from a sideways state to a lengthways state, while the first turning body and the second turning body turn downward with respect to the base body so that the support body turns 90 degrees to change from a lengthways state to a sideways state.

A support device according to claim 2, in addition to the support device according to claim 1, has the support body including: a mounting portion mounted to the tip portion of the first turning body and the tip portion of the second turning body so as to be turnable, and having an arcuate support surface; a support portion slidably supported by the support surface of the mounting portion along the support surface to support a supported object; and an operation portion configured to fix and release the support portion with respect to the mounting portion.

A support device according to claim 3, in addition to the support device according to claim 1 or claim 2, has the base body including an inclination portion inclined at a predetermined angle in a horizontal direction, the base end portion of the first turning body mounted to a first point of the inclination portion so as to be turnable, and the base end portion of the second turning body mounted to a second point placed above the first point in the inclination portion so as to be turnable.

A support device according to claim 4, in addition to the support device according to any one of claim 1 to claim 3, is provided with an operation body configured to fix and release the support body with respect to the tip portion of the second turning body.

A support device according to claim 5, in addition to the support device according to claim 2, is provided with the operation body configured to fix and release the support body with respect to the tip portion of the second turning body, a knob portion of the operation body being arranged on the same side as that of a knob portion of the operation portion of the support body.

A support device according to claim 6, in addition to the support device according to any one of claim 1 to claim 5, is provided with an adjusting unit configured to adjust the attitude of the support body in a lengthways state.

A support device according to claim 7, in addition to the support device according to claim 6, has, as the adjusting unit, an adjustment screw screwed into a screw hole portion of the second turning body.

A support device according to claim 8, in addition to the support device according to any one of claim 1 to claim 7, has the first turning body and the second turning body both formed in a plate shape.

A support device according to claim 9, in addition to the support device according to claim 8, has the base body including an inclination portion inclined at a predetermined angle in a horizontal direction, the inclination portion including opposite plates separately opposing each other in a fore-and-aft direction and a connecting plate connecting lower end portions of these opposite plates to each other, in which the base end portion of the first turning body and the base end portion of the second turning body are arranged between the opposite plates so as to be turnable.

### Advantageous Effect of Invention

According to the present invention, the first turning body and the second turning body turn upward with respect to the base body so that the support body turns 90 degrees to change from a sideways state to a lengthways state, while the first turning body and the second turning body turn downward with respect to the base body so that the support body turns 90 degrees to change from a lengthways state to a sideways state, thereby making it possible to use a supported object stably in any case.

### BRIEF DESCRIPTION OF DRAWINGS

[Fig. 1] Fig. 1 is a perspective view of a support device according to one embodiment of the present invention.
[Fig. 2] Fig. 2 is a perspective view of the same support device.
[Fig. 3] Fig. 3 is a plan view of the same support device.
[Fig. 4] Fig. 4 is a rear view of the same support device.
[Fig. 5] Fig. 5(a) is a cross-sectional view taken along A-A of Fig. 4. Fig. 5(b) is a cross-sectional view taken along B-B of Fig. 4. Fig. 5(c) is a cross-sectional view taken along C-C of Fig. 4.
[Fig. 6] Fig. 6 (a) is a view showing a support portion rendered negatively sloped. Fig. 6(b) is a view showing the support portion rendered positively sloped.
[Fig. 7] Fig. 7 is an illustrative view of a main part of the same support device.
[Fig. 8] Fig. 8 is a perspective view showing a use state (photography in a sideways position) of the same support device.
[Fig. 9] Fig. 9 is a perspective view showing a use state (photography in a lengthways position) of the same support device.
[Fig. 10] Fig. 10 is a perspective view of a support device according to another embodiment of the present invention.
[Fig. 11] Fig. 11 is a perspective view of the same support device.
[Fig. 12] Fig. 12 is a cross-sectional view showing a state of the same support device before adjustment with an adjustment screw.
[Fig. 13] Fig. 13 is a cross-sectional view showing a state of the same support device after adjustment with the adjustment screw.
[Fig. 14] Fig. 14(a) and Fig. 14(b) are front views showing a state where the same support device is equipped with a camera.

### DESCRIPTION OF EMBODIMENTS

Description will be given for one embodiment of the present invention with reference to the drawings.

In the drawings, 1 is a support device. The support device 1 is intended to support a supported object camera 2, and when used is detachably mounted to, for example, an upper end portion of a leg device 3 for a camera.

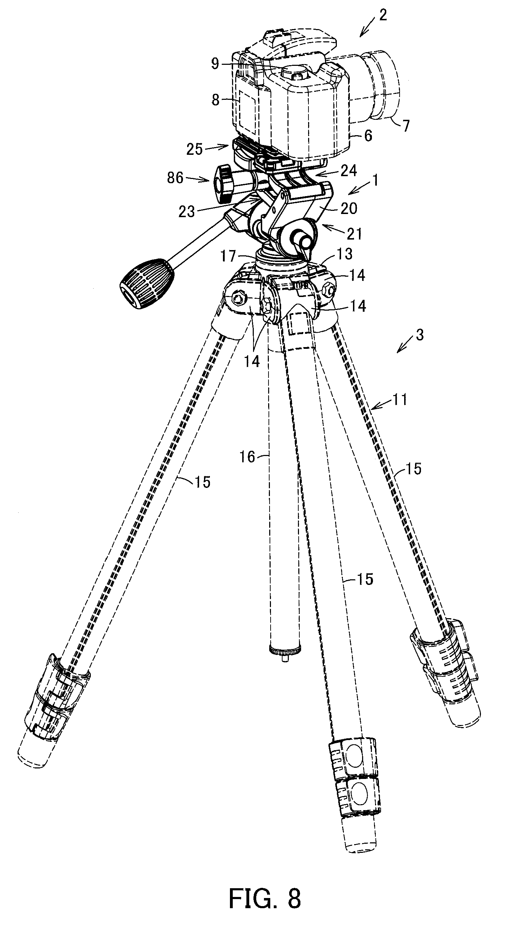

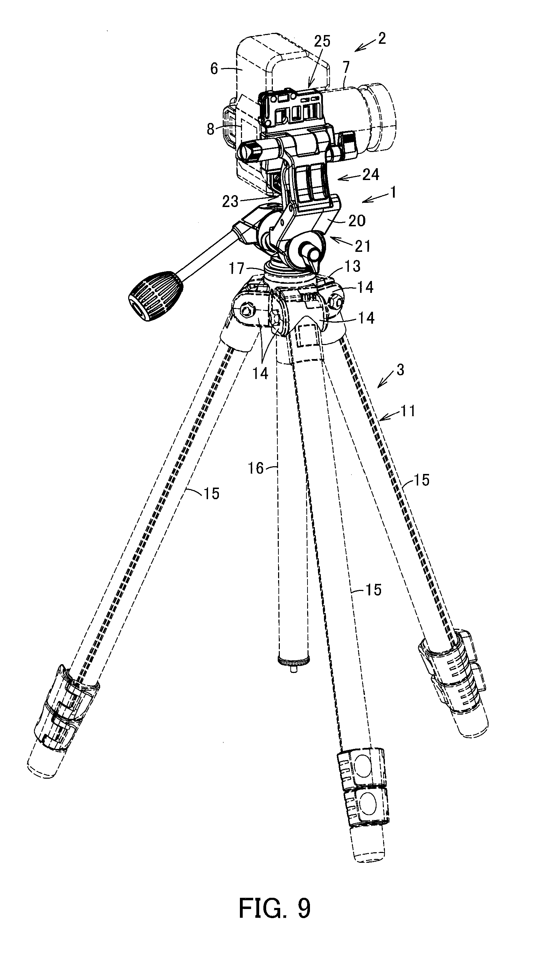

As shown in Figs. 8 and 9, the camera 2 is provided with a cuboid-like camera body portion 6 whose right-to-left direction is a longitudinal direction. From a front face of the camera body portion 6, a columnar lens portion 7 protrudes forward. Further, a rear face of the camera body portion 6 is provided with a liquid crystal display portion 8 as a rectangular display portion. A circular operation portion 9 manually operated by an operator as a user is provided on a right side of a top surface of the camera body portion 6. A screw hole portion (not shown) as a mounting portion is provided in the center of an undersurface of the camera body portion 6.

The leg device 3 is composed only of a tripod 11 without, for example, a camera platform, as shown in Figs. 8 and 9. The tripod 11 is provided with a base 13, three extendable long legs 15 each having an upper end portion being connected to a leg connecting portion 14 of the base 13 so as to be turnable, and one longitudinal elevating body 16 inserted into a center hole portion (not shown) of the base 13 so as to be movable up and down.

Moreover, the elevating body 16 has an upper end portion provided with a disk-shaped support portion 17. The support device 1 is directly mounted to the support portion 17 so as to be detachable. In this way, the support device 1 supporting the camera 2 is supported by the support portion 17 at the upper end portion of the elevating body 16 of the leg device 3.

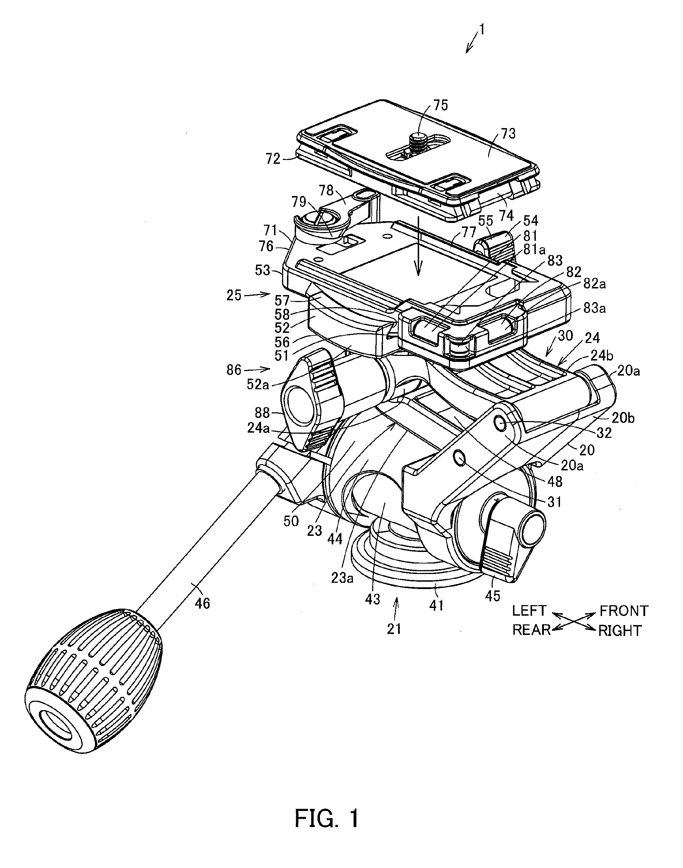

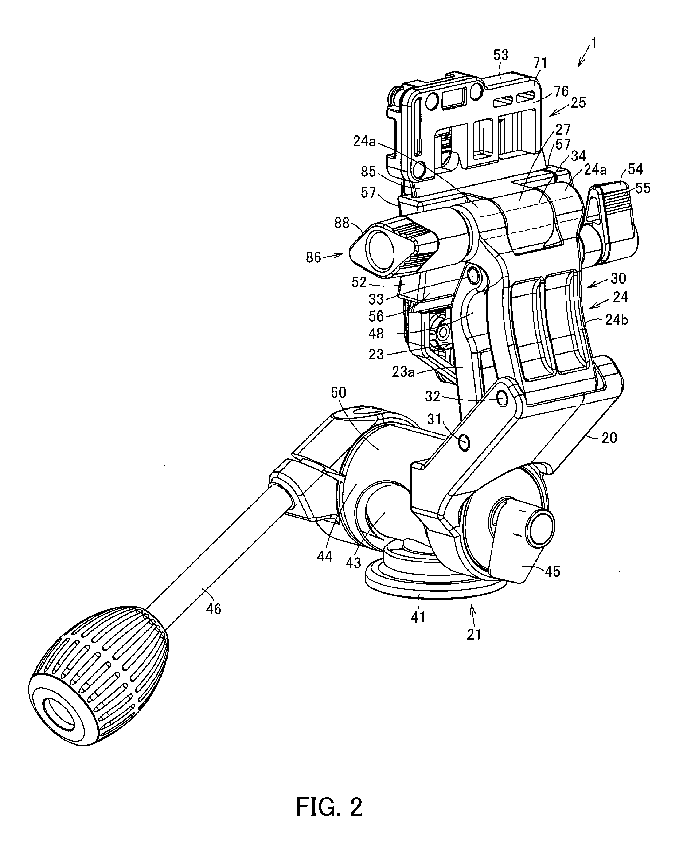

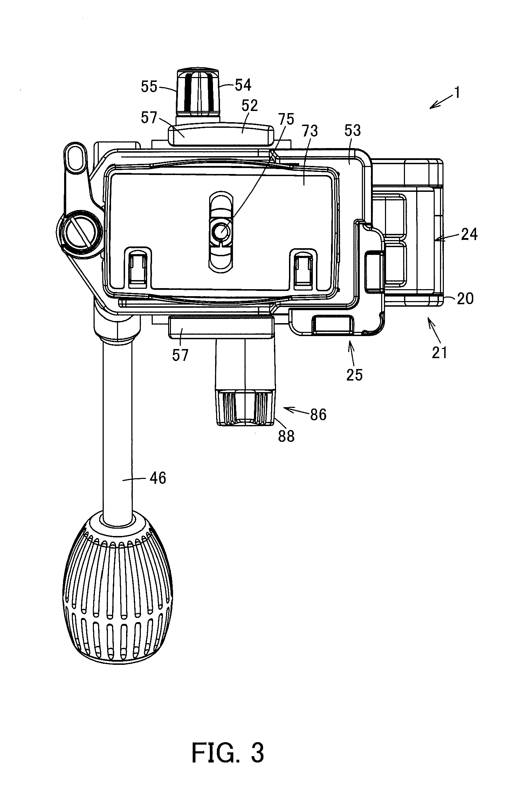

The support device 1 is, as shown in Fig 1 to Fig. 7, provided with a base body 21 detachably mounted to the support portion 17 at the upper end portion of the elevating body 16 of the leg device 3. The base body 21 includes on its right side a positively sloped plate-like inclination portion 20 inclined at a predetermined angle, that is, 45 degrees, for example, in a horizontal direction.

A base end portion of a plate-like first turning body 23 is mounted to a central part in an inclination direction, which is a first point of the inclination portion 20 of the base body 21, through a fore-and-aft shaft member 31 so as to be turnable. The first turning body 23 is then vertically turnable around the shaft member 31 with respect to the inclination portion 20 of the base body 21. The first turning body 23 is one plate-like (panel-like) component formed only of one metallic plate-like member 23a (for example, a magnesium die-casting part) whose fore-and-aft direction is a width direction, for example.

A base end portion of a plate-like second turning body 24 is mounted to an upper end part which is a second point placed above the first point in the inclination portion 20 of the base body 21 so as to be turnable through a fore-and-aft shaft member 32 parallel to the shaft member 31. The second turning body 24 is then vertically turnable around the shaft member 32 with respect to the inclination portion 20 of the base body 21. The second turning body 24 is one plate-like (panel-like) component formed only of one metallic plate-like member 24b (for example, a magnesium die-casting part) whose fore-and-aft direction is a width direction, for example, as with the first turning body 23. In this way, a connecting unit 30 connecting the inclination portion 20 of the base body 21 and the support body 25 is composed of two turning bodies 23 and 24 facing opposite to each other, resulting in high stiffness in the fore-and-aft direction.

Moreover, a tip portion of the first turning body 23 and a tip portion of the second turning body 24 are mounted with a support body 25 detachably supporting the camera 2 so as to be turnable. That is to say, a plate-like support body 25 is provided across the tip portion of the first turning body 23 and the tip portion of the second turning body 24. Additionally, the support body 25 has a lower part including a first turning body mounting part 26, and a second turning body mounting part 27 placed further right than the first turning body mounting part 26.

The first turning body mounting part 26 is mounted with the tip portion of the first turning body 23 through a fore-and-aft shaft member 33 so as to be turnable, while the second turning body mounting part 27 is mounted with the tip portion of the second turning body 24 through a fore-and-aft shaft member 34 so as to be turnable.

Further, the first turning body 23 and the second turning body 24 simultaneously turn upward with respect to the base body 21, so that the support body 25 turns 90 degrees (including approximately 90 degrees) while moving diagonally to the upper right of an upper area of the base body 21 in such a way as to interlock with both the turning bodies 23 and 24, to change from a sideways state in a horizontal attitude to a lengthways state in a perpendicular attitude, thereby allowing the camera 2 supported by the lengthways support body 25 in this manner to be used in a vertical attitude (lengthways position). That is to say, photography at the lengthways position is possible using the camera 2.

Moreover, the first turning body 23 and the second turning body 24 simultaneously turn downward with respect to the base body 21, so that the support body 25 turns 90 degrees (including approximately 90 degrees) while moving diagonally to the lower left of an upper area of the base body 21 in such a way as to interlock with both the turning bodies 23 and 24, to change from a lengthways state in a perpendicular attitude to a sideways state in a horizontal attitude, thereby allowing the camera 2 supported by the sideways support body 25 in this manner to be used in a horizontal attitude (sideways position). That is to say, photography at the sideways position is possible using the camera 2.

In this way, an operator (user) performs a single operation by holding the camera 2 supported by the support body 25 to apply a force in a desired direction, thereby allowing the camera 2 to turn 90 degrees together with the support body 25 with respect to the base body 21. That is, the support body 25 supporting the camera 2 is turnable sideways to/from lengthways 90 degrees in the upper area of the base body 21 with respect to the base body 21 around (including approximately around) the lens portion 7 of the camera 2.

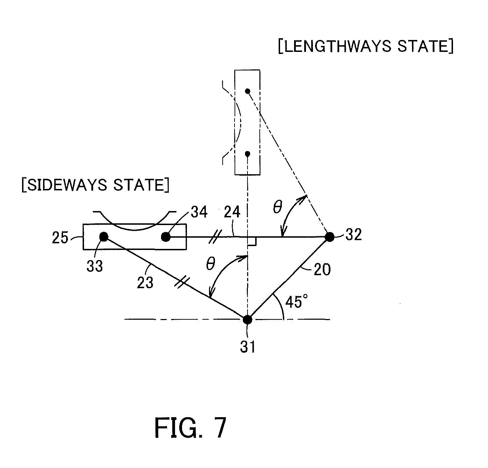

The length of the first turning body 23 (distance between the shaft member 31 of the base end portion and the shaft member 33 of the tip portion) is the same as the length of the second turning body 24 (distance between the shaft member 32 of the base end portion and the shaft member 34 of the tip portion) (see Fig. 7) . The shaft member 34 is a columnar member (hollow shaft member), while the other shaft members 31, 32 and 33 are round shaft-like members (solid shaft members). Further, when the support body 25 is in a sideways state, the first turning body 23 and the second turning body 24 are placed one above the other in a laid state so as to be opposite to each other. When the support body 25 is in a lengthways state, the first turning body 23 and the second turning body 24 are placed right and left in an erected state so as to be opposite to each other.

Here, the base body 21 is provided with the function of a normal camera platform in such a way as to require no separate camera platform, for example. The base body 21 includes a circular base member 41 detachably mounted to the support portion 17 at an upper end portion of the elevating body 16 of the leg device 3 composed only of the tripod 11.

The base member 41 includes a screw hole portion 42 opening downward. A screw shaft portion (not shown) of the support portion 17 of the elevating body 16 in the leg device 3 is screwed into the screw hole portion 42, thereby allowing the base member 41 to be detachably mounted to the support portion 17 of the elevating body 16. That is to say, the support device 1 is directly mounted to an upper end portion of the tripod 11 in use.

Moreover, the base member 41 is mounted with a pan turning member 43 around a vertical axis so as to be turnable right and left (horizontal direction). The pan turning member 43 is mounted with a tilt turning member 44 around a right-to-left axis so as to be turnable vertically.

The pan turning member 43 is mounted with an operation knob 45 so as to be turnable. The operation knob 45 is an approximately plate-like operation member configured to fix and release the pan turning member 43 with respect to the base member 41. Turning of the operation knob 45 in one direction allows the pan turning member 43 to be fixed to the base member 41, while turning of the operation knob 45 in the other direction allows releasing of the pan turning member 43 fixed to the base member 41.

The tilt turning member 44 is mounted with an operation lever 46 so as to be turnable, the operation lever 46 a rod-like operation member configured to fix and release the tilt turning member 44 with respect to the pan turning member 43. Turning of the operation lever 46 in one direction allows the tilt turning member 44 to be fixed to the pan turning member 43, while turning of the operation lever 46 in the other direction allows releasing of the tilt turning member 44 fixed to the pan turning member 43.

The tilt turning member 44 includes an approximately columnar horizontal tubular portion 50 fitted to an outer periphery side of the pan turning member 43 so as to be turnable. Additionally, in a right end portion of the tubular portion 50, the inclination portion 20 having a U-shaped cross section is projectingly arranged in an integral manner so as to be positively sloped at a predetermined angle, for example, an inclined angle of 45 degrees in the horizontal direction. The inclination portion 20 is mounted with respective base end portions of both the turning bodies 23 and 24 so as to be turnable. Both the turning bodies 23 and 24 are opposite to each other one above the other in proximity, and a space portion 48 of a predetermined size is present between these turning bodies 23 and 24.

The inclination portion 20 of the tilt turning member 44 includes opposite plates 20a separately opposing each other in a fore-and-aft direction, and a connecting plate 20b connecting lower end portions of these opposite plates 20a to each other. The base end portions of both the turning bodies 23 and 24 are then arranged between the opposite plates 20a so as to be turnable, and both the turning bodies 23 and 24 are turnable around the shaft members 31 and 32 spanned between the opposite plates 20a.

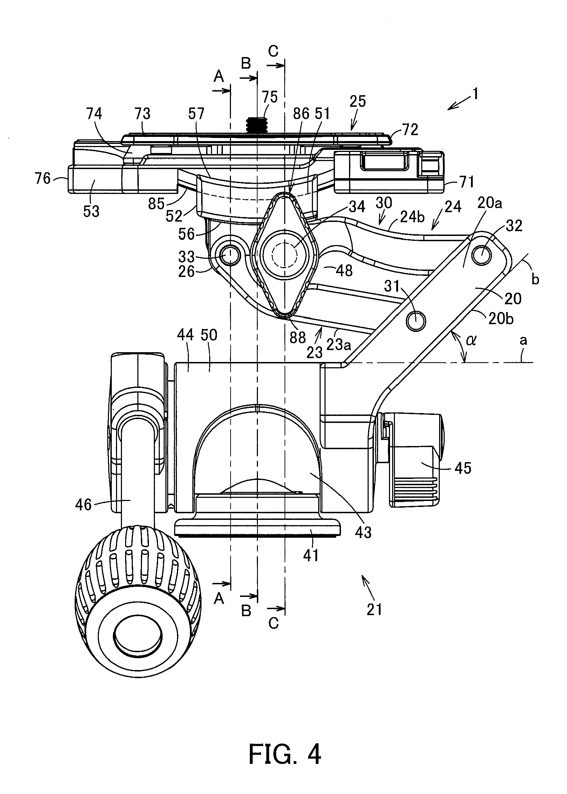

As can be seen in Fig. 4, in rear view, an angle α made by a horizontal line a across an upper end of the tubular portion 50 and a line b in an inclination direction across a lower end of the inclination portion 20 is 45 degrees (including approximately 45 degrees). Further, in the case of the support body 25 in a sideways state, in rear view, the shaft member 33 on a tip side of the first turning body 23, the shaft member 34 on a tip side of the second turning body 24, and the shaft member 32 on a base end side of the second turning body 24 are aligned from right to left and positioned at the same height (including approximately the same height). That is to say, in the case of the support body 25 in a sideways state, three shaft members 32, 33 and 34 are placed on the same horizontal plane.

The support body 25 includes: a mounting portion 52 mounted to the tip portion of the first turning body 23 and the tip portion of the second turning body 24 so as to be turnable, having a top surface as an arcuate support surface 51; a plate-like support portion 53 arcuately and slidably supported by the support surface 51 of the mounting portion 52 right and left along the support surface 51 to support the camera 2; and a turnable operation portion 54 configured to fix and release the support portion 53 with respect to the mounting portion 52.

The mounting portion 52 includes a rectangular plate-like part 56 whose top surface has the arcuate support surface 51 formed projecting downward. On an undersurface of the plate-like part 56, a columnar first turning body mounting part 26 and a columnar second turning body mounting part 27 adjacently aligned right and left are arranged projecting downward.

At both fore-and-aft end portions of the plate-like part 56, protrusions 57 long right and left are arranged projecting upward. On each of the protrusions 57, a guide surface 58 is formed for guiding the support portion 53 along an arc direction.

Either one of a pair of fore-and-aft protrusions (holding parts) 57, for example, a fore (operation portion 54 side) protrusion (one-side holding part) 57 moves, based on turning of the operation portion 54, close to and away from the other, for example, an aft (opposite to the operation portion 54 side) protrusion (other-side holding part) 57.

That is to say, a screw shaft portion 59 of the operation portion 54 as a knob operation member is screwed into a screw hole portion 60 of the mounting portion 52, and turning of the operation portion 54 in one direction allows the fore protrusion 57 to move close to the aft protrusion 57 so that the support portion 53 is held and fixed to the mounting portion 52. Moreover, turning of the operation portion 54 in the other direction allows the fore protrusion 57 to move away from the aft protrusion 57 so as to release the support portion 53 held and fixed to the mounting portion 52.

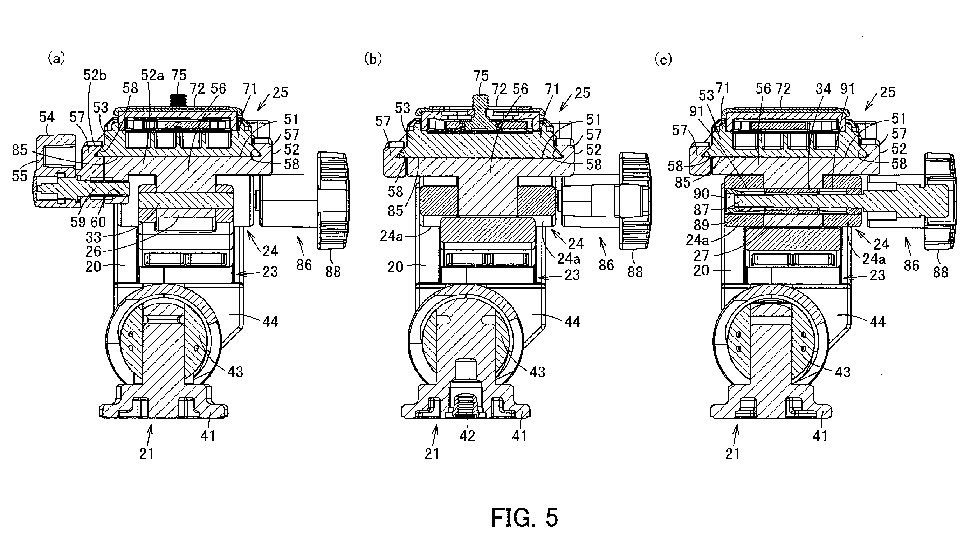

As can be seen in Fig. 5(a) and the like, the operation portion 54 includes a knob portion 55 to be held by an operator by the fingers, and a fore-and-aft screw shaft portion 59 fastened to the knob portion 55. The knob portion 55 is arranged on a front side of the support device 1. Further, the mounting portion 52 is comprised of a body member 52a, and a moving member 52b slightly moving with respect to the body member 52a based on turning of the operation portion 54. Additionally, the protrusion 57 on the operation portion 54 side is formed on the moving member 52b, while the protrusion 57 opposite to the operation portion 54 side is formed on the body member 52a.

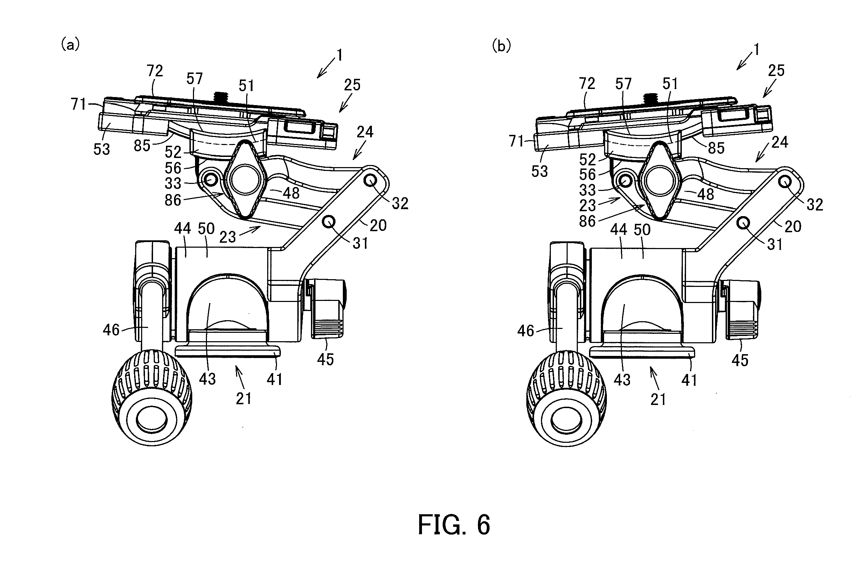

On both of the right and left end portions of the plate-like part 56, an abutting step portion (not shown) regulating sliding of the support portion 53 with respect to the support surface 51 of the mounting portion 52 due to abutment with the support portion 53 is formed. Thus, a turning range as a sliding range of the support portion 53 with respect to the support surface 51 of the mounting portion 52 is defined within a predetermined range (see Fig. 6).

The support portion 53 made in, for example, a quick shoe style, is comprised of: a plate-like support body member 71 arcuately and slidably supported right and left by the support surface 51 of the mounting portion 52 along the support surface 51; and a plate-like detaching member 72 detachable from the support body member 71 and fixed to an undersurface of the camera 2 so as to be releasable.

The detaching member 72 includes a rectangular support plate portion 73 supporting an undersurface of the camera body portion 6 of the camera 2, and a fitting portion 74 provided on an undersurface of the support plate portion 73. The fitting portion 74 is formed in an inverted square pyramid shape forming a rectangle in planar view, for example. In the center of a top surface on the support plate portion 73, a screw shaft portion 75 capable of being screwed into a screw hole portion (not shown) in the center of the undersurface of the camera 2 is erected, and the screw shaft portion 75 protrudes upward from the top surface of the support plate portion 73.

Then, the screw shaft portion 75 of the detaching member 72 is screwed into the screw hole portion on the undersurface of the camera 2, thereby allowing the support plate portion 73 of the detaching member 72 to be detachably mounted to the undersurface of the camera 2. That is to say, the screw shaft portion 75 is screwed into the screw hole portion so that a top surface of the detaching member 72 is securely mounted to the undersurface of the camera body portion 6 of the camera 2.

When using the support device 1, the detaching member 72 is securely mounted in advance to the undersurface of the camera 2. In this case, in a state where a longitudinal direction of the rectangular support plate portion 73 of the detaching member 72 is coincident with a longitudinal direction of a rectangular undersurface of the camera body portion 6 of the camera 2, the detaching member 72 is mounted to the undersurface of the camera body portion 6. Thereby, it is possible to perform a single operation to mount the camera 2 to the support body member 71 through the detaching member 72.

The support body member 71 includes a body plate portion 76 in an approximately pentagon shape in planar view. In a peripheral end portion on a top surface of the body plate portion 76, a fit in receiving portion 77 in a U shape in planar view detachably fitted to the fitting portion 74 on a lower side of the detaching member 72 is arranged projecting upward. On a left end portion of the body plate portion 76, an operation lever portion 78 configured to fix and release the fitting portion 74 of the detaching member 72 with respect to the fit in receiving portion 77 is provided so as to be turnable. The operation lever portion 78 includes an inclined retaining abutment surface 79 abutting with a part of the fitting portion 74 fitted to the fit in receiving portion 77 to prevent the fitting portion 74 from falling out of the fit in receiving portion 77.

Further, in the body plate portion 76, a first level 81, a second level 82, and a third level 83 are provided. The first level 81 includes a columnar bubble tube 81a placed on a rear face side of the body plate portion 76, having a right and left axial direction, and inside the bubble tube 81a, liquid such as alcohol or the like and a bubble are encased. The second level 82 includes a columnar bubble tube 82a placed on a right side surface side of the body plate portion 76, having a fore-and-aft axial direction, and inside the bubble tube 82a, liquid such as alcohol or the like and a bubble are encased. The third level 83 includes a columnar bubble tube 83a placed in the corner where a rear face and a right side surface of the body plate portion 76 intersect with each other, having a vertical axial direction in a vertical direction, and inside the bubble tube 83a, liquid such as alcohol or the like and a bubble are encased.

Additionally, on an undersurface of the body plate portion 76, a arcuate sliding surface 85 is formed projecting downward, and the sliding surface 85 is supported by the support surface 51 of the mounting portion 52 so as to be slidable and turnable.

On the other hand, the support device 1 is provided with an operation body 86 configured to fix and release through the shaft member 34 the second turning body mounting part 27 of the mounting portion 52 of the support body 25 with respect to the tip portion of the second turning body 24. The operation body 86 includes a shaft-like portion 87 long in a fore-and-aft direction located coaxially with the shaft member 34, and a rhombic knob portion (operation portion) 88 fastened to a back end part of the shaft-like portion 87, for being held by an operator by the fingers.

A thread groove 89 is formed on an outer peripheral surface on a front end side which is a tip side of the shaft-like portion 87. Into the thread groove 89, a tubular pressing member 90 is screwed so as to be movable axially with respect to the operation body 86 in accordance with rotation (meaning that turning is included) of the operation body 86.

As shown in Fig. 5(c), the shaft member 34 on a tip side of the second turning body 24 is formed in a columnar shape. The axial center portion of the shaft member 34 is inserted into and fixed to an inner peripheral side of the second turning body mounting part 27 of the mounting portion 52 of the support body 25, and both axial end portions of the shaft member 34 are inserted into and fitted to an inner peripheral side of a tubular part 24a at the tip portion of the second turning body 24 so as to be turnable. In both the axial end portions of the shaft member 34, a slot 91 long along an axial direction is circumferentially formed at intervals.

Further, when an operator holds the knob portion 88 to rotate (turn) the operation body 86 in one direction with respect to the second turning body 24, a part of the shaft member 34 is pressed by the pressing member 90 so as to be elastically deformed outward in a radial direction, and such an elastically deformed part is held compressed on an inner peripheral surface of the tubular part 24a of the second turning body 24. That is to say, the operation body 86 rotates in one direction with respect to the second turning body 24 so that the shaft member 34 is held compressed in the second turning body 24, thereby allowing the mounting portion 52 of the support body 25 to be fixed to the tip portion of the second turning body 24.

Further, when an operator holds the knob portion 88 to rotate (turn) the operation body 86 in the other direction with respect to the second turning body 24, the shaft member 34 held compressed in the inner peripheral surface of the tubular part 24a of the second turning body 24 is released. That is to say, the operation body 86 rotates in the other direction with respect to the second turning body 24 so that the support body 25 fixed to the second turning body 24 is released.

Releasing the fixed state in this manner allows an operator to simultaneously turn in a vertical direction both the turning bodies 23 and 24 only at a predetermined turning angle (angle θ in Fig. 7) with respect to the base body 21, while allowing selectively switching between a perpendicular erected state and a horizontal laid state for these turning bodies 23 and 24. Additionally, the support body 25 is configured to be selectively switched in a sideways state in a horizontal attitude to/from a lengthways state in a perpendicular attitude in conjunction with vertical turning of these turning bodies 23 and 24.

The knob portion 88 of the operation body 86 is arranged on a rear side of the support device 1. That is to say, the knob portion 88 of the operation body 86 is arranged opposite to the knob portion 55 of the operation portion 54 of the support body 25. In other words, the knob portion 88 of the operation body 86 is arranged on either one side (operator side) of the front or back of the support device 1, while the knob portion 55 of the operation portion 54 of the support body 25 is arranged on the other front or back of the support device 1.

Next, description will be given for action and the like of the support device 1.

In the case of using the support device 1, the detaching member 72 of the support body 25 is mounted in advance to the undersurface of the camera body portion 6 of the camera 2 so as to have longitudinal directions coincident to each other.

Further, when the support device 1 and the leg device 3 are utilized to photograph an object with the camera 2, the base body 21 of the support device 1 is mounted to an upper end side of the leg device 3, thereafter mounting the detaching member 72 on an undersurface side of the camera 2 to the support body member 71, so that the camera 2 is supported by the support device 1.

Here, as shown in Fig. 8, in a case where the camera 2 is used in a horizontal attitude (sideways positional attitude) where a longitudinal direction of the camera body portion 6 is a horizontal direction to photograph an object at a sideways position, both the turning bodies 23 and 24 are fixed in the laid state, while fixing the support body 25 to be horizontal (horizontal attitude) and in a sideways state.

That is, for example, an operator simultaneously turns both the turning bodies 23 and 24 downward with respect to the base body 21, thereby turning the support body 25 90 degrees together with the camera 2 so as to be in a sideways state, followed by rotating operation of the operation body 86 for fixing the support body 25 so as to be in a sideways state.

At that time, the tip portion of the second turning body 24 abuts with the first turning body 23, thereby regulating downward turning of both the turning bodies 23 and 24.

Further, in a case where the support body 25 is fixed so as to be horizontal and in a sideways state, when the camera 2 on the support body 25 is not provided in a desired horizontal attitude, the camera 2 in the horizontal attitude is adjusted horizontally by sliding the support portion 53 in an arcuate manner along the arcuate support surface 51 of the mounting portion 52.

The camera 2 in the horizontal attitude is then placed above the base body 21, and in planar view, the center of gravity of the camera 2 is positioned near (may be coincident to) the center (center of gravity) of the leg device 3, so that the camera 2 in the horizontal attitude can be used stably.

Further, as shown in Fig. 9, in a case where the camera 2 is used in a vertical attitude (lengthways positional attitude) where a longitudinal direction of the camera body portion 6 is a vertical direction to photograph an object at a lengthways position, both the turning bodies 23 and 24 are fixed in the erected state, while fixing the support body 25 so as to be perpendicular (perpendicular attitude) and in a lengthways state.

That is, for example, an operator simultaneously turns both the turning bodies 23 and 24 upward with respect to the base body 21, thereby turning the support body 25 90 degrees together with the camera 2 so as to be in a lengthways state, followed by rotating operation of the operation body 86 for fixing the support body 25 so as to be in a lengthways state.

At that time, the tip portion of the first turning body 23 abuts with the second turning body 24, thereby regulating upward turning of both the turning bodies 23 and 24. Only after the camera 2 in the horizontal attitude on the support body 25 is adjusted horizontally will turning of the support body 25 90 degrees allow the camera 2 to have a desired perpendicular vertical attitude.

Further, the camera 2 in the vertical attitude is placed above the base body 21, and in planar view, the center of gravity of the camera 2 is positioned near (may be coincident to) the center (center of gravity) of the leg device 3, so that the camera 2 in the vertical attitude can be used stably.

In this way, with the above-described support device 1, the first turning body 23 and the second turning body 24 turn upward with respect to the base body 21 so that the support body 25 turns 90 degrees with respect to the base body 21 to change from a sideways state to a lengthways state, while the first turning body 23 and the second turning body 24 turn downward with respect to the base body 21 so that the support body 25 turns 90 degrees with respect to the base body 21 to change from a lengthways state to a sideways state. Therefore, in any case, at least a part of the camera 2 supported by the support body 25 is placed above the base body 21, and the camera 2 is thus not offset with respect the leg device 3, so that the center of gravity of the camera 2 is not largely displaced from the center (center of gravity) of the leg device 3, while the camera 2 can be used stably together with the leg device 3. Additionally, it is possible to switch the state of the support body 25 by performing a single operation, resulting in favorable operability.

Further, for example, in the case of changing photography at the sideways position to photography at the lengthways position, or conversely, in the case of changing photography at the lengthways position to photography at the sideways position, it is possible to photograph sideways and lengthways at approximately the same position without requiring framing again. That is, it is possible to keep a target object within a frame without lengthways and sideways displacement.

Moreover, the support portion 53 of the support body 25 is slid along the arcuate support surface 51 of the mounting portion 52, thereby making it possible to finely adjust the attitude of the camera 2 (horizontal attitude of the support body 25 in a sideways state).

Additionally, rotating operation of the operation body 86 allows the support body 25 to be appropriately fixed and released with respect to the second turning body 24, resulting in further favorable operability.

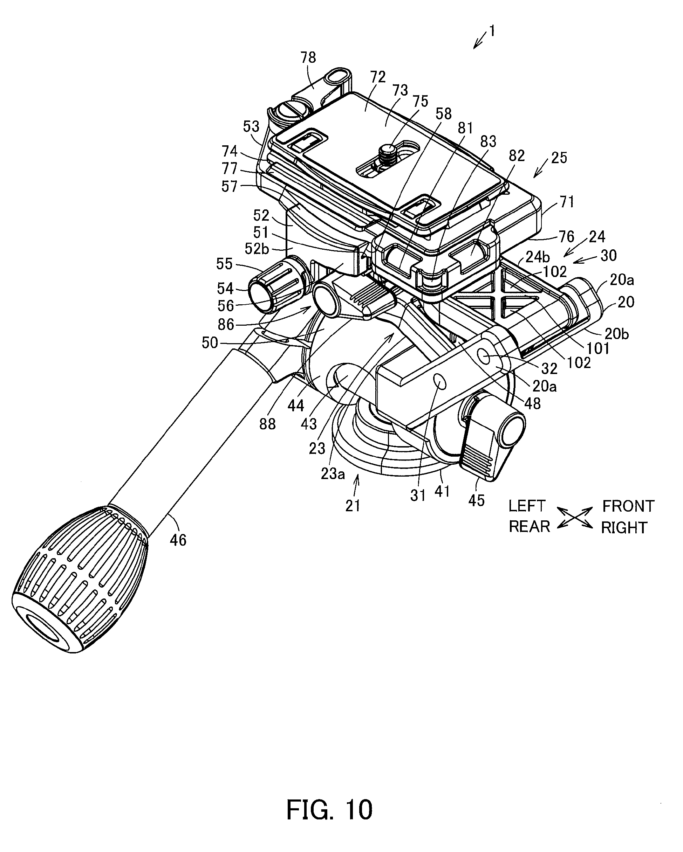

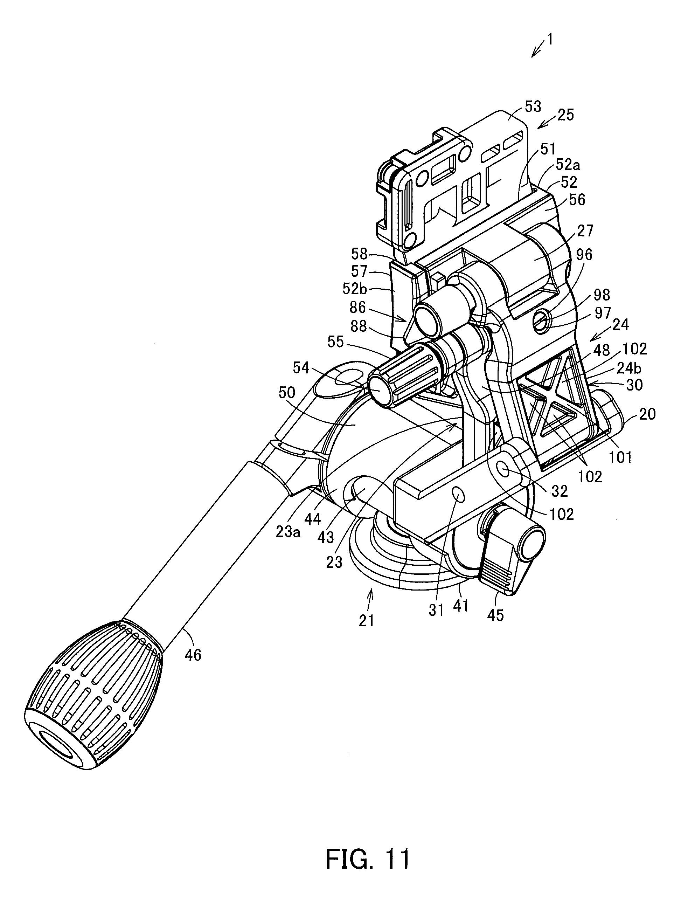

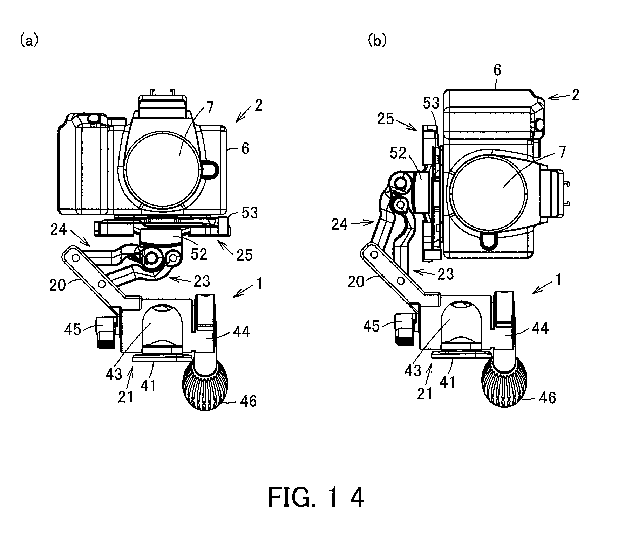

Next, description will be given for another embodiment of the present invention with reference to Fig. 10 to Fig. 14.

In the support device 1 according to such another embodiment, for the purpose of improvement in operability, the knob portion 88 of the operation body 86 is arranged on the same side as that of the columnar knob portion 55 of the operation portion 54 of the support body 25. That is, for example, both the knob portions 55 and 88 brought in close to each other are arranged on a rear side (operator side) of the support device 1. For example, although not shown in the figure, it is also possible to configure in such a way that both the knob portions 55 and 88 brought in close to each other are arranged on a front side of the support device 1.

Moreover, in this support device 1, for the purpose of correcting a production error and the like, an adjustment screw 96 as an adjusting unit is provided in the second turning body 24 for adjusting (finely adjusting) the perpendicular attitude of the support body 25 in a lengthways state.

The adjustment screw 96 provided so as to be rotationally operable by a tool (not shown) such as, for example, a flat-blade screwdriver is screwed and inserted into a screw hole portion 97 of the second turning body 24 so as to allow access to a back side of the support body 25. The screw hole portion 97 is formed so as to penetrate a top surface and an undersurface of a part on a tip side of the second turning body 24. On a top surface and an undersurface of a part on each base end side of the first turning body 23 and the second turning body 24, four triangular concave portions 102 are arranged so as to form a projecting cross portion 101.

On a base end surface of the adjustment screw 96, a groove portion 98 engageable with a tool is formed. On an apical surface of the adjustment screw 96, formed is a planate abutment surface 100 abutting with an abutment receiving surface 99 on a back side of the lengthways support body (camera support stand) 25 after adjustment.

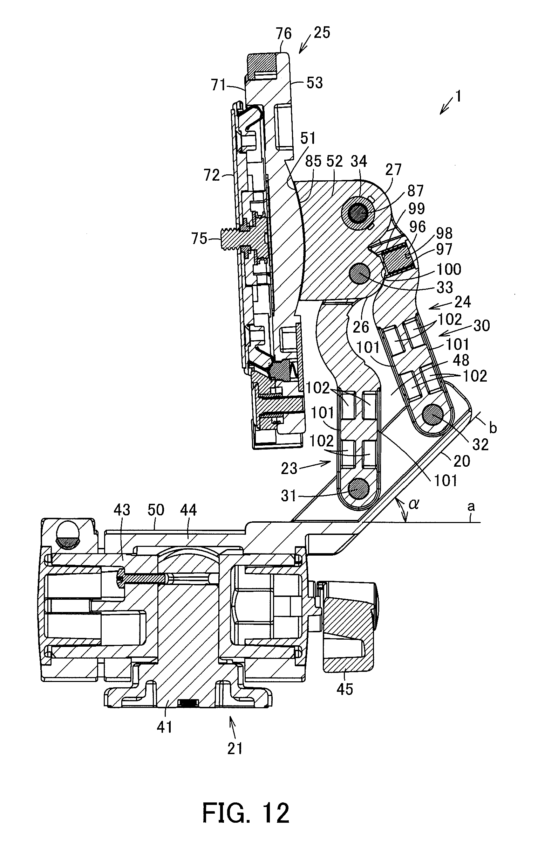

That is, as shown in Fig. 12, due to variation in dimensions caused by, for example, a production error and the like, in the case of the support body 25 in a lengthways state, the lengthways support body 25 may not have desired perpendicular attitude (that is to say, may slightly lean in a perpendicular direction).

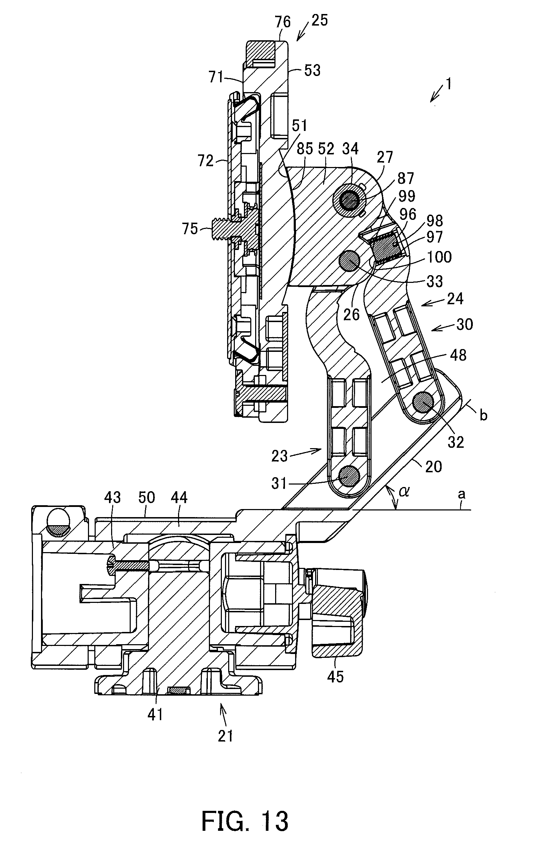

In this case, as shown in Fig. 13, rotating operation of the adjustment screw 96 is performed by a tool to move the adjustment screw 96 from a normal position (position where the abutment surface 100 does not abut with the abutment receiving surface 99) to a predetermined abutment position in accordance with the lean (position where the abutment surface 100 abuts with the abutment receiving surface 99), toward the support body 25 side.

Thereby, in the case of the support body 25 in a lengthways state, the abutment surface 100 of the adjustment screw 96 abuts with the abutment receiving surface 99 on a back side of the mounting portion 52 of the support body 25 so that upward turning of both the turning bodies 23 and 24 is regulated, resulting in desired perpendicular attitude of the support body 25 in a lengthways state. It is noted that other configurations of the support device 1 are basically the same as that of the aforementioned embodiment.

Additionally, even with the support device 1 in such the other configuration, the camera 2 can be used stably together with the leg device 3, while it is possible to switch the state of the support body 25 between a sideways state and a lengthways state by performing a single operation, thereby making it possible to achieve a function effect similar to that of the aforementioned embodiment, such as favorable operability.

Further, with the support device 1, the knob portion 88 of the operation body 86 is configured to be arranged on the same side as that of the knob portion 55 of the operation portion 54 of the support body 25, resulting in further favorable operability.

Moreover, the configuration including the adjustment screw 96 for adjusting the attitude of the support body 25 in a lengthways state allows correction of a production error and the like by adjustment with the adjustment screw 96, thereby making it possible for the support body 25 in a lengthways state to have a desired perpendicular attitude.

It should be noted that in any embodiment, in order to allow close-up photography with the camera 2 without using the leg device 3, for example, the base body 21 is provided in a plate shape, and the base body 21 may include a resting surface capable of resting on a rested portion.

In this case, the detaching member 72 of the support body 25 is provided so as to be detachable with respect to the support body member 71 even in either a first state, or a second state of turning 90 degrees from the first state. In the case of providing the base body 21 in a plate shape, the base body 21 will lose function as a camera platform, and a tripod with a camera platform is thus utilized when using the leg device 3.

Further, a supported object supported by the support body 25 is not limited to a camera and may be, for example, a video camera, a measuring instrument, a telescope, or the like.

Moreover, the number of legs of the tripod 11 of the leg device 3 is optional, and may be one leg, for example.

Additionally, the shape of both the turning bodies 23 and 24 is not limited to a plate shape and may be in an arm shape or the like. The shape of both the turning bodies 23 and 24 is also not limited to a configuration including a curved plate part, for example, allowing a flat plate shape.

### INDUSTRIAL APPLICABILITY

The present invention is mounted to, for example, a leg device for a camera and the like, in use.

### REFERENCE SIGNS LIST

- 1: support device
- 2: camera as a supported object
- 3: leg device
- 20: inclination portion
- 20a: opposite plates
- 20b: connecting plate
- 21: base body
- 23: first turning body
- 24: second turning body
- 25: support body
- 51: support surface
- 52: mounting portion
- 53: support portion
- 54: operation portion
- 55: knob portion of an operation portion of a support body
- 86: operation body
- 88: knob portion of an operation body
- 96: adjustment screw as an adjusting unit
- 97: screw hole portion

## Claims

1. A support device comprising:
a base body mounted to a leg device;
a first turning body having a base end portion mounted to the base body so as to be turnable;
a second turning body having a base end portion mounted to the base body so as to be turnable; and
a support body mounted to a tip portion of the first turning body and a tip portion of the second turning body so as to be turnable for supporting a supported object, wherein
the first turning body and the second turning body turn upward with respect to the base body so that the support body turns 90 degrees to change from a sideways state to a lengthways state, while the first turning body and the second turning body turn downward with respect to the base body so that the support body turns 90 degrees to change from a lengthways state to a sideways state.

2. The support device according to claim 1, wherein
the support body includes:
a mounting portion mounted to the tip portion of the first turning body and the tip portion of the second turning body so as to be turnable, the mounting portion having an arcuate support surface;
a support portion slidably supported by the support surface of the mounting portion along the support surface to support the supported object; and
an operation portion configured to fix and release the support portion with respect to the mounting portion.

3. The support device according to claim 1 or 2, wherein
the base body includes an inclination portion inclined at a predetermined angle in a horizontal direction,
the base end portion of the first turning body is mounted to a first point of the inclination portion so as to be turnable, and
the base end portion of the second turning body is mounted to a second point placed above the first point in the inclination portion so as to be turnable.

4. The support device according to any one of claims 1 to 3, further comprising an operation body configured to fix and release the support body with respect to the tip portion of the second turning body.

5. The support device according to claim 2, comprising the operation body configured to fix and release the support body with respect to the tip portion of the second turning body, wherein
a knob portion of the operation body is arranged on the same side as that of a knob portion of the operation portion of the support body.

6. The support device according to any one of claims 1 to 5, further comprising an adjusting unit configured to adjust attitude of the support body in a lengthways state.

7. The support device according to claim 6, wherein
the adjusting unit is an adjustment screw screwed into a screw hole portion of the second turning body.

8. The support device according to any one of claims 1 to 7, wherein
both the first turning body and the second turning body are formed in a plate shape.

9. The support device according to claim 8, wherein
the base body includes an inclination portion inclined at a predetermined angle in a horizontal direction, the inclination portion including opposite plates separately opposing each other in a fore-and-aft direction, and a connecting plate configured to connect lower end portions of the opposite plates to each other, and
the base end portion of the first turning body and the base end portion of the second turning body are arranged between the opposite plates in a turnable manner.
